(19) **Europäisches Patentamt**
**European Patent Office**
**Office européen des brevets**

(11) **EP 0 845 178 B1**

(12) **EUROPÄISCHE PATENTSCHRIFT**

(45) Veröffentlichungstag und Bekanntmachung des Hinweises auf die Patenterteilung:
**31.01.2001 Patentblatt 2001/05**

(21) Anmeldenummer: **96907296.6**

(22) Anmeldetag: **29.03.1996**

(51) Int Cl.7: **H04L 7/02**, H04L 27/227

(86) Internationale Anmeldenummer:
**PCT/DE96/00544**

(87) Internationale Veröffentlichungsnummer:
**WO 97/07612 (27.02.1997 Gazette 1997/10)**

(54) **VERFAHREN ZUR SYNCHRONISATION**

SYNCHRONISATION METHOD

PROCEDE DE SYNCHRONISATION

(84) Benannte Vertragsstaaten:
**AT BE CH DE DK ES FI FR GB GR IE IT LI NL PT SE**

(30) Priorität: **16.08.1995 DE 19529982**

(43) Veröffentlichungstag der Anmeldung:
**03.06.1998 Patentblatt 1998/23**

(73) Patentinhaber: **ROBERT BOSCH GMBH**
**70442 Stuttgart (DE)**

(72) Erfinder: **ALBERTY, Thomas**
**D-71522 Backnang (DE)**

(74) Vertreter: **Camp, Ronald et al**
**Marconi Intellectual Property**
**Waterhouse Lane**
**Chelmsford Essex CM1 2QX (GB)**

(56) Entgegenhaltungen:
**US-A- 3 815 034**

• **IEEE TRANSACTIONS ON COMMUNICATIONS, SEPT. 1979, USA, Bd. Com-27, Nr. 9, ISSN 0090-6778, Seiten 1288-1295, XP002007256 MESSERSCHMITT D G: "Frequency detectors for PLL acquisition in timing and carrier recovery"**
• **IEEE TRANSACTIONS ON INFORMATION THEORY, Bd. 28, Nr. 1, 1.Januar 1982, Seiten 55-67, XP000560517 UNGERBOECK G: "CHANNEL CODING WITH MULTILEVEL/PHASE SIGNALS" in der Anmeldung erwähnt**
• **IEEE TRANSACTIONS ON COMMUNICATIONS, NEW YORK, USA, Bd. 42, Nr. 6, Juni 1994, ISSN 0090-6778, Seiten 2268-2275, XP000456237 VAN STRALEN N A ET AL: "Joint synchronization and demodulation of trellis codes"**
• **IEEE TRANSACTIONS ON INFORMATION THEORY, Bd. 28, Nr. 1, 1.Januar 1982, Seiten 55-67, XP000560517 UNGERBOECK G: "CHANNEL CODING WITH MULTILEVEL/PHASE SIGNALS"**

## Beschreibung

Stand der Technik

Bei der Übertragung von Datensignalen wird häufig Codierung verwendet, um z.B. eine Reduzierung der benötigten Sendeenergie pro Datenbit bei gleichbleibender Fehlerrate zu ermöglichen. Die Reduzierung der Sendeenergie pro Datenbit führt allerdings zu einer Verschlechterung der Synchronisation des Demodulators, welche insbesondere bei höherstufigen Modulationsverfahren ohnehin schon problematisch ist. Eine Möglichkeit zur Verbesserung ist in diesem Fall die Verwendung von Schätzwerten $c''_i$ des Datendecoders für die tatsächlich übertragenen Kanalsymbole $c_i$. Ein solches Verfahren ist in dem Aufsatz |1| von Ungerboeck "Channel Coding with Multilevel/Phase Signals",IEEE IT-28, Nr. 1, Januar 1982, Seiten 55-67 (insbesondere Figur 17) aufgezeigt.

Dieses Verfahren ist jedoch in zweierlei Hinsicht problematisch. Erstens liegen diese Schätzwerte nur mit einer Zeitverzögerung vor, d.h., bei dem durch die Rückkopplung entstehenden Regelkreis aus Demodulator und Datendecoder können Stabilitätsprobleme auftreten. Zweitens befindet sich mit dem Datendecoder eine hochgradige, gedächtnisbehaftete Nichtlinearität im Regelkreis, so daß die Anfangssynchronisation problematisch ist, der Regelkreis kann anfangs lange Zeit in labilen Gleichgewichtszuständen, sogenannten false-locks verweilen.

Eine weitere Möglichkeit zur Verbesserung der Synchronisation ist die Einfügung von bekannten Daten in den zu übertragenden Datenstrom. Ein solches Verfahren ist beispielsweise in der Patentschrift US-A-3,815,034 aufgezeigt. Dieses Verfahren ist ebenfalls in zweierlei Hinsicht problematisch. Erstens muß für die zusätzlich zu übertragenden, bekannten Daten Sendeenergie aufgebracht werden, wodurch die oben angestrebte Reduzierung der Sendeenergie pro Datenbit (genauer pro Nutzdatenbit) zumindest teilweise wieder zunichte gemacht wird. Zweitens wird durch die insgesamt erhöhte Datenrate das Frequenzspektrum des Sendesignals breiter, so daß eine größere Bandbreite des Übertragungskanals belegt werden muß.

Bei der Übertragung von Datensignalen mit höherstufigen Modulationsverfahren lassen sich durch gezieltes Ausblenden auch Synchronisationsverfahren verwenden, die eigentlich nur für niederstufige Modulationsverfahren geeignet sind. So kann man z.B. bei 16-QAM das Empfangssignal nur dann der Synchronisationseinheit zuführen, falls es einem der inneren vier Punkte entspricht, andernfalls wird es der Synchronisationseinheit nicht zugeführt. Das Eingangssignal der Synchronisationseinheit entspricht dann dem bei einer QPSK-Modulation, so daß auch nur eine Synchronisationseinheit für QPSK benötigt wird. Ein solches Verfahren ist beispielsweise in dem Dokument IEEE Transactions on Communications, USA, Band COM-27, No. 9, September 1979, ISSN 0090-6778, Seiten 1288 bis 1295; D.G. Messerschmitt aufgezeigt.

Durch das gezielte Ausblenden des Empfangssignals wird bei diesem Verfahren allerdings Information verworfen, so daß die Synchronisation prinzipiell schlechter wird. Das obige Ziel der Reduzierung der Sendeenergie pro Datenbit erfordert aber eine Verbesserung der Synchronisation.

Vorteile der Erfindung

Durch die Synchronisationsverfahren gemäß der Erfindung gelingt es, im Regel- und/oder Steuerkreis einer Synchronisationseinrichtung die Verzögerungszeit zu verringern und die Anfangssynchronisation zu verbessern.

Vorteilhafte Ausgestaltungen der Erfindung ergeben sich aus den Unteransprüchen.

Wesentliches Merkmal der Erfindung ist die Verwendung eines Parameterdetektors für ein N-stufiges Kanalsymbolalphabet bei einer Datenübertragung mit einem M-stufigen Kanalsymbolalphabet, mit $1 < N < M$, so daß die vom Datendecoder benötigte Information verringert wird. Vorteilhaft ist hierbei einerseits, daß diese verringerte Information vom Datendecoder mit geringerer Verzögerungszeit bereitgestellt werden kann, wie in der parallelen Patentanmeldung "Datendecoder" desselben Anmelders vom selben Anmeldetag gezeigt, und andererseits, daß dadurch weniger labile Gleichgewichtspunkte der Regelung existieren und somit die Anfangssynchronisation unproblematischer ist.

Zeichnungen

Es folgt nun eine Beschreibung von Ausführungsbeispielen der Erfindung anhand der Figuren.

Figur 1 zeigt ein Prinzipschaltbild des Übertragungssystems.

Figur 2a verdeutlicht die Lage der Kanalsymbole bei QPSK Modulation.

Figur 2b zeigt ein Zustandsübergangsdiagramm der Codierung, welches auch als "Trellis Diagramm" bezeichnet wird.

Figur 3 zeigt ein Prinzipschaltbild des Empfängers. In der

Figur 4 ist eine mögliche Realisierung des Parameterdetektors gezeichnet, und in der

Figur 5 eine weitere mögliche Realisierung des Parameterdetektors.

Beschreibung von Ausführungsbeispielen

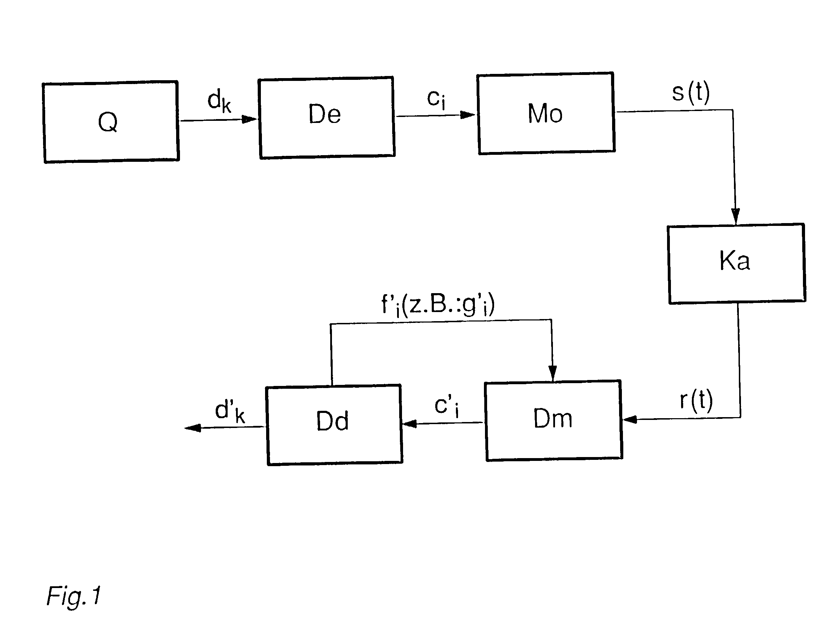

Gemäß Figur 1 erzeugt die Quelle Q eine Folge von Datenbits $d_k$, welche einem Datenencoder De zugeführt wird. Dieser erzeugt eine Folge von Kanalsymbolen $c_i$, welche einem Modulator Mo zugeführt wird. Liegt der Übertragung z.B. eine QPSK Modulation zugrunde, so sind die Kanalsymbole $c_i$ Elemente eines

vierstufigen Kanalsymbolalphabets, d. h., $c_i \in \{1, j, -1, -j\}$, wobei j die imaginäre Einheit ist.

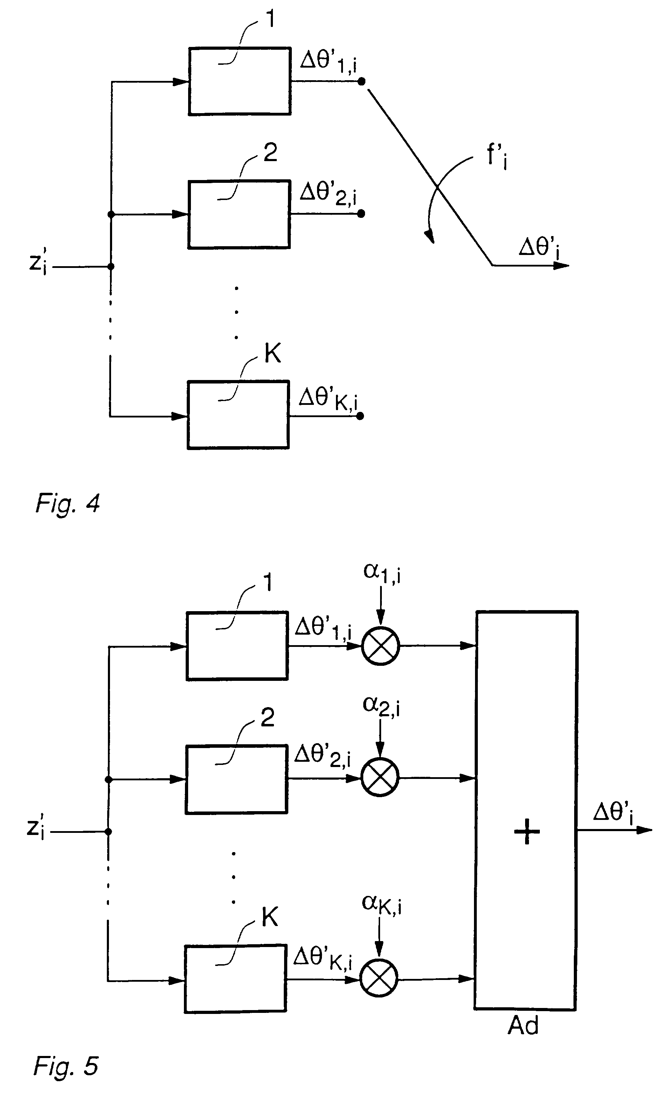

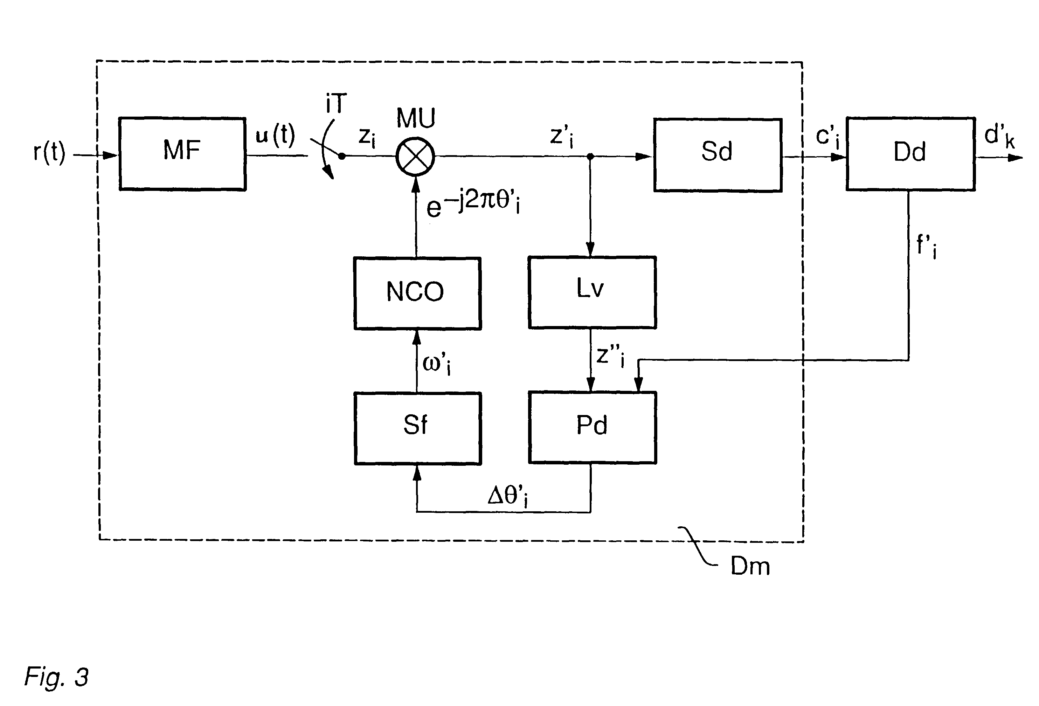

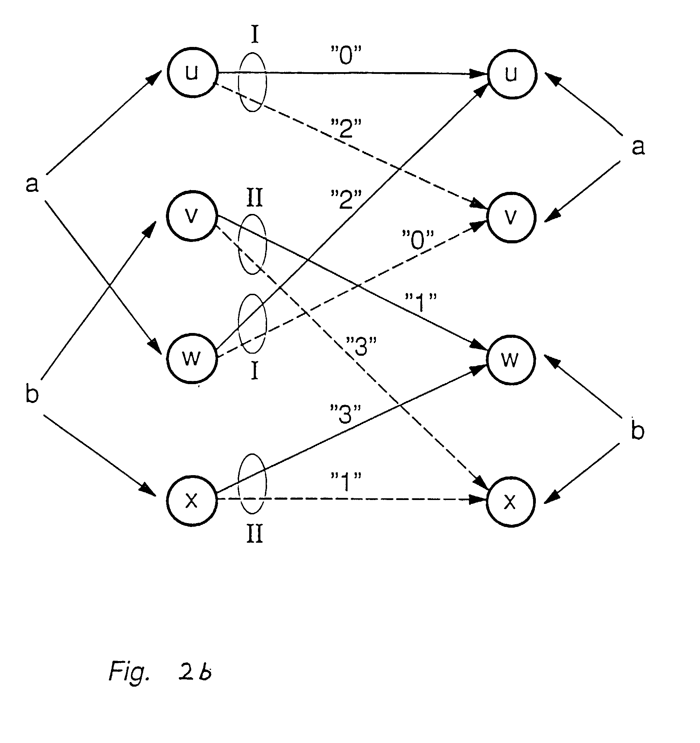

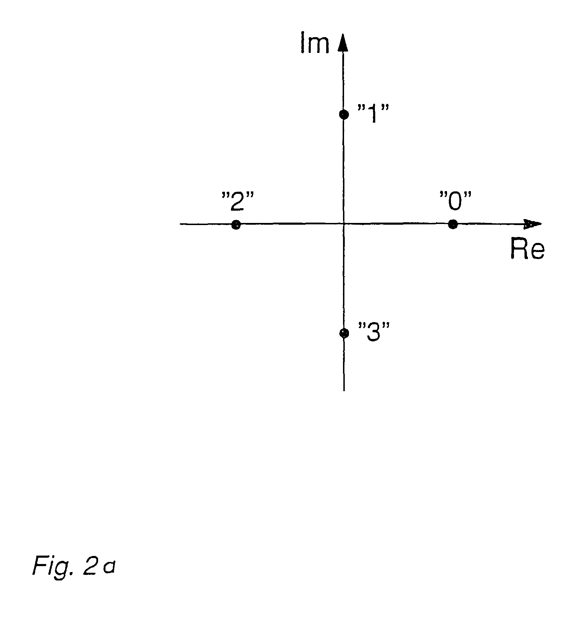

Diese vier möglichen Kanalsymbole sind in Figur 2a als Punkte in der komplexen Ebene dargestellt. Der Modulator Mo erzeugt schließlich das eigentliche Sendesignal s(t) für die Übertragung über den Kanal Ka.

Beim Empfänger wird das Empfangssignal r(t) einem Demodulator Dm zugeführt. Dieser liefert eine Folge von Schätzwerten $c'_i$ für die Kanalsymbole, eventuell mit Gütemaßen versehen, welche einem Datendecoder Dd zugeführt wird. Dieser bestimmt schließlich eine Folge von geschätzten Datenbits $d'_k$. Darüber hinaus liefert er eine Folge von Werten $f'_i$, welche dem Demodulator Dm zugeführt wird. Bei dem in dem Aufsatz |1| angegeben Verfahren wäre $f'_i$ eine Folge von verbesserten Schätzwerten $c''_i$ für die Kanalsymbole, während $f'_i$ bei einem der erfindungsgemäßen Verfahren eine Folge von Schätzwerten $g'_i$ für die Zugehörigkeit zu einer Kanalsymbolgruppe ist, eventuell versehen mit entsprechenden Gütemaßen.

Zur Verdeutlichung des Prinzips der Bestimmung der Schätzwerte für die Gruppenzugehörigkeit ist in Fig. 2b ein einfaches Zustandsübergangsdiagramm für eine Faltungscodierung mit der Rate 1/2 bei QPSK dargestellt. Zu jedem Zeitpunkt befindet sich der Datenencoder De in einem der vier durch Kreise gekennzeichneten Zustände U, V, W, X. Erhält der Datenencoder De von der Quelle Q das nächste Datenbit $d_k$, so folgt er bei $d_k=0$ dem Pfad entsprechend dem durchgezogenen Pfeil, während er bei $d_k=1$ dem gestrichelten Pfad folgt. Dadurch wird der Übergang zum nächsten Zustand festgelegt. Die Ziffern an den Pfaden kennzeichnen dabei jeweils das nächste Kanalsymbol, welches dem Modulator Mo zugeführt wird. Der Datendecoder Dd im Empfänger basiert ebenfalls auf diesem Zustandsübergangsdiagramm. Die Bestimmung der Folge $d'_k$ ist dabei äquivalent zur Bestimmung des wahrscheinlichsten Pfades durch das Zustandsübergangsdiagramm. Dazu bestimmt der Datendecoder Dd in jedem Zeitpunkt i für jeden Zustand z eine sogenannte Pfadmetrik $p_{z,i}$, welche ein Maß für die Wahrscheinlichkeit dafür darstellt, daß der Pfad zum Zeitpunkt i durch diesen Zustand z verläuft (i = 0, 1, 2, 3, .... ). Mit Hilfe des Schätzwertes $c'_{i+1}$ vom Demodulator Dm, eventuell inklusive eines zugehörigen Gütemaßes, bestimmt der Datendecoder Dd dann die entsprechenden Pfadmetriken zum Zeitpunkt i+1. Diese Arbeitsweise ist in dem Aufsatz von Forney "The Viterbi Algorithm", Proceedings of the IEEE, Band 61, Nr. 3, März 1973, Seiten 268-278 ausführlich beschrieben. Für die Beschreibung des der Erfindung zugrundeliegenden Verfahrens ist nur bedeutsam, daß diese Pfadmetriken $p_{z,i}$ existieren, und daß sie ein Maß für die Wahrscheinlichkeiten der Zustände zum Zeitpunkt i sind.

Aus dem Zustandsübergangsdiagramm entnimmt man, daß von jedem Zustand aus nur jeweils zwei Kanalsymbole ausgehen. Unterteilt man das Kanalsymbolalphabet in zwei Kanalsymbolgruppen I und II, wobei die Kanalsymbolgruppe I die beiden Kanalsymbole "0" und "2", und die Kanalsymbolgruppe II die zwei Kanalsymbole "1" und "3" enthält, so können von jedem Zustand nur die Kanalsymbole einer Kanalsymbolgruppe ausgehen. Mit Hilfe der Pfadmetriken läßt sich also zum Zeitpunkt i ein Schätzwert für die Gruppenzugehörigkeit zum Zeitpunkt i+1 ableiten. Im einfachsten Fall wird dazu nur der momentan wahrscheinlichste Zustand bestimmt, und die zugehörige Kennzeichnung der Kanalsymbolgruppe, welche von diesem Zustand ausgehen kann, an den Demodulator Dm weitergeleitet. Bei der üblichen Darstellung der Pfadmetriken ist der wahrscheinlichste Zustand durch die minimale Pfadmetrik gekennzeichnet, so daß nur der Zustand mit der minimalen Pfadmetrik bestimmt werden muß.

Zur Erläuterung der Anwendung der erfindungsgemäßen Verfahren wird eine rückgekoppelte Trägerphasensynchronisation bei MPSK-Modulation betrachtet. Ein entsprechendes Prinzipschaltbild eines Demodulators (Dm in Fig. 1) ist in Figur 3 abgebildet. Das Empfangssignal r(t) wird zunächst einem Matched-Filter MF zugeführt. Das Ausgangssignal u(t) des Matched-Filters wird zu den optimalen Abtastzeitpunkten t=iT abgetastet, wobei T die Symboldauer der MPSK-Modulation ist. Anschließend wird die Trägerphase mit Hilfe eines Multiplizierers Mu korrigiert, so daß sich die Abtastwerte $z'_i$ ergeben. Daraus werden die Soft-decision Werte $c'_i$ in einer Baugruppe Sd ermittelt, welche dem Datendecoder Dd zugeführt werden. Dieser bestimmt schließlich die gewünschten Datenbits $d'_k$ und zusätzlich die Werte $f'_i$, welche für die Synchronisation benötigt werden. Um diese Werte $f'_i$ zur Bestimmung des verbliebenen Trägerphasenfehlers der Werte $z'_i$ verwenden zu können, werden letztere entsprechend der Laufzeit des Datendecoders in einem Verzögerungsglied Lv verzögert, so daß sich die Werte $z''_i$ ergeben. Aus $z''_i$ und $f'_i$ bestimmt ein Parameterdetektor Pd, welcher im Fall der Trägerphasenregelung in der Regel als Phasendetektor bezeichnet wird, den verbliebenen Phasenfehler $\Delta\Theta'_i$, woraus dann mit Hilfe eines Schleifenfilters Sf und eines numerisch gesteuerten Oszillators NCO der zur Trägerphasenkorrektur benötigte Drehfaktor $e^{-j2\pi\Theta'_i}$ ermittelt wird. Die Trägersynchronisation entspricht also einem üblichen Phase-Locked-Loop, wobei aber der Phasendetektor Pd zusätzlich die Werte $f'_i$ des Datendecoders Dd verwendet.

Die Funktionsweise des Phasendetektors soll am Beispiel der MPSK-Modulation beschrieben werden. Dazu wird angenommen, daß die Kanalsymbole im Idealfall, d. h., ohne Trägerphasenfehler und ohne andere Störungen, in den M Sollpunkten $s_m$

$$s_m = e^{j2\pi m/M}$$

mit $m \in [0, 1 ...., M-1]$ liegen (wie in Figur 2a für QPSK dargestellt).

Liegen keine Werte $f'_i$ vom Datendecoder vor,

so muß ein normaler Phasendetektor für MPSK verwendet werden. Eine Möglichkeit ist dann beispielsweise die Bestimmung der Phasendifferenz des Wertes $z'_i$ zum nächstliegenden Sollpunkt $s_m$. Der Phasenfehler $\Delta\Theta'_i$ ergibt sich dann gemäß

$$\Delta\Theta'_i = \arg[z'^M_i],$$

d. h., die Bestimmung der Phase des zur M-ten Potenz genommenen Wertes $z'_i$.

Liegt hingegen entsprechend dem in Literaturstelle |I| angegebenen Verfahren vom Datendecoder ein Schätzwert für das Kanalsymbol vor, d. h., stellt $f'_i$ die Nummer m des entsprechenden Sollpunktes dar, so kann man das Signal $z'_i$ durch Multiplikation mit $e^{-j2\pi f'_i/M}$ auf ein unmoduliertes Signal zurückführen, d. h., der Sollpunkt dieses Signals liegt immer bei $s_0$, und man kann den Phasenfehler beispielsweise gemäß

$$\Delta\Theta'_i = \arg[z'_i\, e^{-j2\pi f'_i/M}]$$

bestimmen.

Um die Verwendung einer reduzierten Information vom Datendecoder zu erläutern, wird jetzt zunächst der Spezialfall QPSK betrachtet. Die zugehörige Lage der Sollpunkte in der komplexen Ebene hierzu ist schon in Fig. 2a gezeigt. Die vier möglichen Kanalsymbole werden jetzt in zwei Gruppen I und II aufgeteilt. Die Kanalsymbole "0" und "2" werden der Gruppe I zugeordnet, und die Kanalsymbole "I" und "3" werden der Gruppe II zugeordnet (Figur 2b). Die Gruppe I entspricht damit der üblichen Konstellation bei BPSK, während die Gruppe II einer um $\pi/2$ gedrehten BPSK-Konstellation entspricht. Liefert der Datendecoder mittels des Signals $f'_i$ die Information, welcher Gruppe ein Kanalsymbol angehört, so kann ein für die Gruppe angepaßter Phasendetektor verwendet werden; bei Zugehörigkeit zur Gruppe I also ein normaler BPSK Phasendetektor, d. h., der Phasenfehler läßt sich z.B. gemäß

$$\Delta\Theta'_i = \arg[z'^2_i]$$

bestimmen. Hingegen kann man bei Zugehörigkeit zur Gruppe II das Signal $z'_i$ durch Drehung um $-\pi/2$ auf eine normale BPSK-Konstellation zurückführen, und dann einen normalen Phasendetektor für BPSK verwenden, d. h., der Phasenfehler läßt sich z.B. gemäß

$$\Delta\Theta'_i = \arg[(-jz'_i)^2]$$

bestimmen. Trifft man die Festlegung, daß $f'_i=0$ eine Zugehörigkeit zur Gruppe I bedeutet und $f'_i=1$ eine Zugehörigkeit zur Gruppe II bedeutet, so läßt sich die Bestimmung des Phasenfehlers für beide Fälle auch durch

$$\Delta\Theta'_i = \arg[(1-2f'_i)\cdot z'^2_i]$$

darstellen.

Der Phasenfehler, das heißt, die durch die obige Gleichung beschriebene Phasendetektorkennlinie, wird also entsprechend der Gruppenzugehörigkeit angepaßt.

Das Beispiel der QPSK-Modulation mit der Einteilung in zwei gegeneinander verdrehte BPSK-Kanalsymbolgruppen läßt sich natürlich direkt auf andere Modulationsarten anwenden. Bei MPSK-Modulation kann man beispielsweise eine Einteilung in zwei gegeneinander verdrehte M'PSK-Kanalsymbolgruppen (mit $M' = M/2$) oder in vier gegeneinander verdrehte M"PSK-Kanalsymbolgruppen (mit $M'' = M/4$ vornehmen. Verallgemeinert kann man ein M-stufiges Kanalsymbolalphabet in K nicht unbedingt gleich große Gruppen einteilen, wobei jede Gruppe weniger als M Symbole enthält. Dabei können diese Gruppen evtl. sogar überlappend sein, d. h., ein oder mehrere Kanalsymbole können in mehreren Gruppen enthalten sein. Der Phasendetektor könnte dann beispielsweise wie in Figur 4 dargestellt realisiert werden. Das Signal $z'_i$ wird K Verarbeitungsblöcken zugeführt, wobei der r-te Block einen Phasendetektor für eine Symbolkonstellation entsprechend der r-ten Kanalsymbolgruppe repräsentiert und wobei $1 \leq r \leq K$. Abhängig von dem vom Datendecoder gelieferten Signal $f'_i$, welches ja eine Information über die Gruppenzugehörigkeit liefert, wird dann das Ausgangssignal des zu dieser Gruppe gehörigen Phasendetektors verwendet. Trifft man die Festlegung, daß $f'_i = r$ eine Zugehörigkeit zur r-ten Gruppe kennzeichnet, so ist also der Phasenfehler $\Delta\Theta'_i$ durch $\Delta\Theta'_i = \Delta\Theta'_{f_i,i}$ gegeben, wobei $\Delta\Theta'_{r,i}$ das Ausgangssignal des Phasendetektors für die r-te Gruppe darstellt. Sofern sich die Kanalsymbolgruppen aber nur durch eine Drehung voneinander unterscheiden, kann man wie vorstehend beim Beispiel der QPSK-Modulation auch das Signal $z'_i$ zunächst mittels einer durch $f'_i$ bestimmten Drehung auf eine einzige Gruppe zurückführen, so daß nur ein Phasendetektor für eine einzige Gruppe erforderlich ist.

Liefert der Datendecoder zusätzlich noch ein Gütemaß $\alpha_i$ für die getroffene Gruppenentscheidung $f'_i$, so kann man das Ausgangssignal natürlich noch entsprechend der Güte gewichten (bewerten). Dies kann beispielsweise durch eine einfache Multiplikation erfolgen, falls $\alpha_i \geq 0$ und falls größere Werte von $\alpha_i$ eine höhere Zuverlässigkeit der Gruppenentscheidung kennzeichnen.

Liefert der Datendecoder für jede der K Gruppen ein Gütemaß, d.h. $\alpha_{1,i}, \alpha_{2,i} ........, \alpha_{K,i}$, so kann man auch gemäß Figur 5 die entsprechend ihrer Güte gewichteten Ausgangssignale aller K Phasendetektoren für die K Gruppen mit einem Addierer Ad addieren, um ein Phasenfehlersignal für die Regelschleife zu erhalten.

Liefert der Datendecoder Dd entsprechend Literaturstelle |1| Schätzwerte für die Kanalsymbole $c'_i$, so können diese beispielsweise mit Hilfe einer Tabelle in eine Gruppenentscheidung überführt werden. Wählt man dabei die Gruppeneinteilung so, daß es weniger Gruppen als Kanalsymbole gibt, so enthält $f'_i$ weniger Information als $c''_i$ mit der Folge, daß allgemeinen $f'_i$ weniger fehlerbehaftet ist und damit insbesondere für die Anfangsphase der Synchronisation unproblematischer ist.

Alternativ könnte man auch mit den geschätzten Datenbits $d'_k$ des Datendecoders Dd diese Schätzwerte $c''_i$ entsprechend der Literaturstrelle |1| erhalten und dann wie oben in eine Gruppenentscheidung überführen.

In beiden Fällen wird eine Entscheidung bezüglich der Datenbits $d_k$ oder der Kanalsymbole $c_i$ getroffen, die im folgenden zusammenfassend als Datenentscheidung bezeichnet wird.

Das erfindungsgemäße Verfahren läßt sich natürlich auch bei anderen Synchronisations- oder Kompensationseinrichtungen anwenden, wobei nur andere Bezeichnungen üblich sind. Bei der Trägerfrequenzsynchronisation wird der Parameterdetektor in der Regel als Frequenzfehlerdetektor bezeichnet und sein Ausgangssignal entsprechend Frequenzfehler. Bei der Taktphasen- bzw. Taktfrequenzsynchronisation sind die gleichen Begriffe wie bei der Trägerphasen- bzw. Trägerfrequenzsynchronisation üblich. Bei der Amplitudenregelung wird der Parameterdetektor in der Regel als Pegeldetektor und sein Ausgangssignal als Pegelfehler bezeichnet. Bei der Quadraturfehlersynchronisation (besser gesagt: Quadraturfehlerkompensation) werden die Bezeichnungen Quadraturfehlerdetektor und Quadraturfehler benutzt.

Statt der oben beschriebenen Rückwärtsregelung kann auch eine Vorwärtsregelung durchgeführt werden.

**Patentansprüche**

1. Verfahren zur Synchronisation eines Empfängers bei codierter Datenübertragung mittels eines M-stufigen Kanalsymbolalphabets, dadurch gekennzeichnet, daß das Kanalsymbolalphabet in eine Anzahl von K nicht unbedingt gleich große Gruppen (I, II) unterteilt wird mit K > 1, so daß mindestens eine Gruppe weniger als M Kanalsymbole enthält, und wobei

   - entweder das Verfahren auf vorläufigen oder endgültigen Datenentscheidungen eines Datendecoders basiert und verfügbare, vorläufige oder endgültige Datenentscheidungen zunächst auf Entscheidungen der Gruppenzugehörigkeit zurückgeführt werden, welche dann fortlaufend zur Auswahl eines der jeweiligen Gruppe entsprechenden Parameterdetektors (1, 2, ..., K) oder zur Auswahl einer der jeweiligen Gruppe entsprechenden Parameterdetektorkennlinie verwendet werden,

   - oder aufgrund der durch die Codierung vorhandenen Redundanz zu den empfangenen Kanalsymbolen eine Entscheidung der Gruppenzugehörigkeit getroffen wird, welche dann fortlaufend zur Auswahl eines der Gruppe entsprechenden Parameterdetektors oder zur Auswahl einer der Gruppe entsprechenden Parameterdetektorkennlinie verwendet wird,

   - oder aufgrund der durch die Codierung vorhandenen Redundanz zu den empfangenen Kanalsymbolen jeweils Maße für die Wahrscheinlichkeit der Zugehörigkeit zu einer oder mehreren Gruppen bestimmt werden, welche Maße dann zur Auswahl der Gewichtung der Ausgangssignale des der jeweiligen Gruppe entsprechenden Parameterdetektors verwendet werden.

2. Verfahren nach einem der vorhergehenden Ansprüche, dadurch gekennzeichnet, daß das Kanalsymbolalphabet in eine Anzahl von K gleich großen Gruppen unterteilt wird mit 1 < K < M.

3. Verfahren nach einem der vorhergehenden Ansprüche, dadurch gekennzeichnet, daß das Kanalsymbolalphabet in zwei gleich große Gruppen unterteilt wird.

4. Verfahren nach einem der vorhergehenden Ansprüche, dadurch gekennzeichnet, daß die Gruppenentscheidung aus dem Zustandsmetriken eines Viterbi-Decoders abgeleitet wird.

5. Verfahren nach einem der vorhergehenden Ansprüche, dadurch gekennzeichnet, daß die Einteilung des Kanalsymbolalphabets in Gruppen (I, II) derart erfolgt, daß ausgehend von jedem zustand des der Codierung zugrunde liegenden Zustandsübergangsdiagramms nur Kanalsymbole einer Gruppe auftreten können.

6. Verfahren nach einem der Ansprüche 1 bis 4, dadurch gekennzeichnet, daß die Einteilung des Kanalsymbolalphabets in Gruppen (I, II) derart erfolgt, daß hinführend zu jedem Zustand des der Codierung zugrunde liegenden Zustandsübergangsdiagramms nur Kanalsymbole einer Gruppe auftreten können.

7. Verfahren nach einem der vorhergehenden Ansprüche, dadurch gekennzeichnet, daß zu jedem Zeitpunkt der momentan wahrscheinlichste Zustand im Zustandsübergangsdiagramm bestimmt wird, und daraus die entsprechende Gruppenentscheidung abgeleitet wird.

8. Verfahren nach einem der vorhergehenden Ansprüche, dadurch gekennzeichnet, daß zusätzlich ein für ein M-stufiges Kanalsymbolalphabet geeigner Parameterdetektor vorhanden ist, und daß aus der durch die Codierung vorhandenen Redundanz zusätzlich ein Gütemaß für die getroffene Entscheidung der Gruppenzugehörigkeit beziehungsweise für die Wahrscheinlichkeit der Zugehörigkeit zu einer oder mehreren Grupen abgeleitet wird, aufgrund dessen die Ausgangssignale der Parameterdetektoren entsprechend gewichtet verwendet werden.

9. Verfahren nach Anspruch 8, dadurch gekennzeichnet, daß abhängig von dem abgeleiteten Gütemaß genau einer der Parameterdetektoren verwendet wird.

10. Verfahren nach Anspruch 7, 8 oder 9, dadurch gekennzeichnet, daß zu jeder Gruppe die Wahrscheinlichkeit des momentan wahrscheinlichsten Zustands der dieser Gruppe zugeordneten Zustände bestimmt und daraus das Gütemaß abgeleitet wird.

11. Verfahren nach einem der vorhergehenden Ansprüche, dadurch gekennzeichnet, daß eine Korrektur der Trägerphase, das heißt der Phase des Trägers der empfangenen, modulierten Schwingung, zusammen mit einer Korrektur der Trägerfrequenz, das heißt der Frequenz des Trägers der empfangenen, modulierten Schwingung, durchgeführt wird.

12. Verfahren nach einem der Ansprüche 1 bis 10, dadurch gekennzeichnet, daß eine Korrektur der Trägerphase, das heißt der Phase des Trägers der empfangenen, modulierten Schwingung, getrennt von einer Korrektur der Trägerfrequenz, das heißt der Frequenz des Trägers der empfangenen, modulierten Schwingung, durchgeführt wird.

13. Verfahren nach Anspruch 12, dadurch gekennzeichnet, daß zwischen der Korrektur der Trägerfrequenz und der Korrektur der Trägerphase zumindest eine Filterung erfolgt.

14. Verfahren nach einem der vorhergehenden Ansprüche, dadurch gekennzeichnet, daß dem Parameterdetektor oder den Parameterdetektoren das Signal zugeführt wird, das bezüglich der Trägerphase, das heißt der Phase des Trägers der empfangenen, modulierten Schwingung, und bezüglich der Trägerfrequenz, das heißt der Frequenz des Trägers der empfangenen, modulierten Schwingung, korrigiert ist.

15. Verfahren nach Anspruch 12 oder 13, dadurch gekennzeichnet, daß dem Parameterdetektor oder den Parameterdetektoren nur das bezüglich der Trägerfrequenz korrigierte Signal zugeführt wird.

16. Verfahren nach einem der Ansprüche 1 bis 12, dadurch gekennzeichnet, daß dem Parameterdetektor oder den Parameterdetektoren das bezüglich der Trägerphase und Trägerfrequenz noch nicht korrigierte Signal zugeführt wird.

17. Verfahren nach einem der vorhergehenden Ansprüche, dadurch gekennzeichnet, daß es bei der Trägerphasensynchronisation verwendet wird.

18. Verfahren nach einem der Ansprüche 1 bis 16, dadurch gekennzeichnet, daß es bei der Trägerfrequenzsynchronisation verwendet wird.

19. Verfahren nach einem der Ansprüche 1 bis 16, dadurch gekennzeichnet, daß es bei der Taktphasensynchronisation verwendet wird.

20. Verfahren nach einem der Ansprüche 1 bis 16, dadurch gekennzeichnet, daß es bei der Taktfrequenzsynchronisation verwendet wird.

21. Verfahren nach einem der Ansprüche 1 bis 16, dadurch gekennzeichnet, daß es bei der Pegelsynchronisation verwendet wird.

22. Verfahren nach einem der Ansprüche 1 bis 16, dadurch gekennzeichnet, daß es bei der Quadraturfehlerkompensation verwendet wird.

23. Verfahren nach einem der Ansprüche 1 bis 10, 17 bis 22, dadurch gekennzeichnet, daß die Synchronisation durch eine Vorwärtsregelung erfolgt.

24. Verfahren nach einem der Ansprüche 1 bis 10, 17 bis 22, dadurch gekennzeichnet, daß die Synchronisation durch eine Rückwärtsregelung erfolgt.

25. Verfahren nach einem der Ansprüche 1 bis 10, 17 bis 22, dadurch gekennzeichnet, daß die Synchronisation teilweise durch eine Vorwärtsregelung und teilweise durch eine Rückwärtsregelung erfolgt.

**Claims**

1. Method of synchronising a receiver in coded data transmission by means of an M-level channel symbol alphabet, characterised in that the channel symbol alphabet is divided into a quantity of K groups (I,II) not necessarily all of the same size where K > 1, so that at least one group contains fewer than M channel symbols, and wherein

   - either the method is based on provisional or final data decisions by a data decoder and available provisional or final decisions are first reduced to decisions on group membership which are then used continuously to select a parameter detector (1, 2, ... K) corresponding to the given group or to select a parameter detector characteristic corresponding to the given group,

- or a decision on group membership is taken on the basis of the redundancy relating to the received channel signals which is caused by the coding and is then used continuously to select a parameter detector corresponding to the group or to select a parameter detector characteristic corresponding to the group,

- or indications of the probability of membership of one or more groups are in each case determined on the basis of the redundancy relating to the received channel symbols which is caused by the coding, which indications are then used to select the weighting of the output signals from the parameter detector corresponding to the given group.

2. Method according to any of the foregoing claims, characterised in that the channel symbol alphabet is divided into a quantity of K groups of the same size where 1 < K < M.

3. Method according to any of the foregoing claims, characterised in that the channel symbol alphabet is divided into two groups of the same size.

4. Method according to any of the foregoing claims, characterised in that the group decision is derived from the state metrics of a Viterbi decoder.

5. Method according to any of the foregoing claims, characterised in that the division of the channel symbol alphabet into groups (I, II) is made in such a way that starting from each state in the trellis diagram on which the coding is based only channel symbols in one group can occur.

6. Method according to any of claims 1 to 4, characterised in that the division of the channel symbol alphabet into groups (I, II) is made in such a way that going to each state in the trellis diagram on which the coding is based only channel symbols in one group can occur.

7. Method according to any of the foregoing claims, characterised in that the most probable state in the trellis diagram at the time is determined at any given time and the appropriate group decision is derived therefrom.

8. Method according to any of the foregoing claims, characterised in that a parameter detector suitable for an M-level channel symbol alphabet is also present and in that a quality indicator for the decision taken on group membership or for the probability of membership of one or more groups is also derived from the redundancy created by the coding, on the basis of which quality indicator the output signal from the parameter detector is used with the appropriate weighting.

9. Method according to claim 8, characterised in that precisely one of the parameter detectors is used, as a function of the derived quality indicator.

10. Method according to claim 7, 8 or 9, characterised in that, for each group, the probability of that state which, of the states assigned to this group, is most probable at the time is determined and the quality indication is derived therefrom.

11. Method according to any of the foregoing claims, characterised in that a correction of the carrier phase, i.e. the phase of the carrier of the received modulated oscillation, is performed, together with a correction of the carrier frequency, i.e. the frequency of the carrier of the received modulated oscillation.

12. Method according to any of claims 1 to 10, characterised in that a correction of the carrier phase, i.e. the phase of the carrier of the received modulated oscillation, is performed, separately from a correction of the carrier frequency, i.e. the frequency of the carrier of the received modulated oscillation.

13. Method according to claim 12, characterised in that at least one filtering operation takes place between the correction of the carrier frequency and the correction of the carrier phase.

14. Method according to any of the foregoing claims, characterised in that the signal which has been corrected in respect of the carrier phase, i.e. the phase of the carrier of the received modulated oscillation, and in respect of the carrier frequency, i.e. the frequency of the carrier of the received modulated oscillation, is fed to the parameter detector or parameter detectors.

15. Method according to claim 12 or 13, characterised in that only the signal which has been corrected in respect of the carrier frequency is fed to the parameter detector or parameter detectors.

16. Method according to any of claims 1 to 12, characterised in that the signal which has not as yet been corrected in respect of carrier frequency and carrier phase is fed to the parameter detector or parameter detectors.

**17.** Method according to any of the foregoing claims, characterised in that it is used in carrier phase synchronisation.

**18.** Method according to any of claims 1 to 16, characterised in that it is used in carrier frequency synchronisation.

**19.** Method according to any of claims 1 to 16, characterised in that it is used in clock phase synchronisation.

**20.** Method according to any of claims 1 to 16, characterised in that it is used in clock frequency synchronisation.

**21.** Method according to any of claims 1 to 16, characterised in that it is used in level synchronisation.

**22.** Method according to any of claims 1 to 16, characterised in that it is used in quadrature error correction.

**23.** Method according to any of claims 1 to 10, 17 to 22, characterised in that the synchronisation is performed by feedforward control.

**24.** Method according to any of claims 1 to 10, 17 to 22, characterised in that the synchronisation is performed by feedback control.

**25.** Method according to any of claims 1 to 10, 17 to 22, characterised in that the synchronisation is performed partly by feedforward control and partly by feedback control.

**Revendications**

**1.** Procédé de synchronisation d'un récepteur dans une transmission de données codées au moyen d'un alphabet de symboles de canal à M niveaux, caractérisé en ce que l'alphabet de symboles de canal est divisé en une certaine quantité de K groupes (I, II) qui ne sont pas nécessairement tous de la même taille où K > 1, de telle sorte qu'au moins un groupe contienne un nombre de symboles de canal inférieur à M et dans lequel :

- soit le procédé est basé sur des décisions de données prévisionnelles ou finales prises par un décodeur de données et des décisions prévisionnelles ou finales disponibles sont d'abord réduites à des décisions concernant l'appartenance au groupe qui sont ensuite utilisées continûment pour sélectionner un détecteur de paramètres (1, 2, ... K) correspondant au groupe donné ou pour sélectionner une caractéristique de détecteur de paramètres correspondant au groupe donné,
- soit une décision concernant l'appartenance au groupe est prise sur la base de la redondance concernant les signaux de canal reçus qui est provoquée par le codage et est ensuite utilisée continûment pour sélectionner un détecteur de paramètres correspondant au groupe ou pour sélectionner une caractéristique de détecteur de paramètres correspondant au groupe,
- soit des indications de la probabilité d'appartenance à un ou plusieurs groupes sont déterminées dans chaque cas sur la base de la redondance concernant les symboles de canal reçus qui est provoquée par le codage, lesquelles indications sont ensuite utilisées pour sélectionner la pondération des signaux de sortie provenant du détecteur de paramètres correspondant au groupe donné.

**2.** Procédé selon l'une quelconque des revendications précédentes, caractérisé en ce que l'alphabet de symboles de canal est divisé en K groupes de la même taille où 1 < K < M.

**3.** Procédé selon l'une quelconque des revendications précédentes, caractérisé en ce que l'alphabet de symboles de canal est divisé en deux groupes de la même taille.

**4.** Procédé selon l'une quelconque des revendications précédentes, caractérisé en ce que la décision de groupe est déduite de la métrique d'état d'un décodeur Viterbi.

**5.** Procédé selon l'une quelconque des revendications précédentes, caractérisé en ce que la division de l'alphabet de symboles de canal en groupes (I, II) est réalisée d'une manière telle qu'en partant de chaque état du diagramme en treillis sur lequel le codage est basé seuls les symboles de canal d'un groupe peuvent apparaître.

**6.** Procédé selon l'une quelconque des revendications 1 à 4, caractérisé en ce que la division de l'alphabet de symboles de canal en groupes (I, II) est réalisée d'une manière telle qu'en allant vers chaque état du diagramme en treillis sur lequel le codage est basé seuls les symboles d'un groupe peuvent apparaître.

**7.** Procédé selon l'une quelconque des revendications précédentes, caractérisé en ce que l'état le plus probable du diagramme en treillis à l'instant est déterminé à n'importe quel moment donné et que la décision de groupe appropriée est déduite de celui-ci.

**8.** Procédé selon l'une quelconque des revendications précédentes, caractérisé en ce qu'un détecteur de paramètres adapté pour un alphabet de symboles de canal à M niveaux est également présent et en ce qu'un indicateur de qualité pour la décision prise concernant l'appartenance au groupe ou pour la probabilité d'appartenance à un ou plusieurs groupes est également déduit de la redondance créée par le codage, indicateur de qualité sur la base duquel le signal de sortie provenant du détecteur de paramètres est utilisé avec la pondération appropriée.

**9.** Procédé selon la revendication 8, caractérisé en ce qu'un des détecteurs de paramètres est précisément utilisé comme une fonction de l'indicateur de qualité déduit.

**10.** Procédé selon la revendication 7, 8 ou 9, caractérisé en ce que, pour chaque groupe, la probabilité de cet état qui, parmi les états attribués à ce groupe, est le plus probable à l'instant, est déterminée et l'indication de qualité est déduite de celle-ci.

**11.** Procédé selon l'une quelconque des revendications précédentes, caractérisé en ce qu'une correction de la phase de porteuse, c'est-à-dire la phase de la porteuse de l'oscillation modulée reçue, est effectuée en même temps qu'une correction de la fréquence de porteuse, c'est-à-dire la fréquence de la porteuse de l'oscillation modulée reçue.

**12.** Procédé selon l'une quelconque des revendications 1 à 10, caractérisé en ce qu'une correction de la phase de porteuse, c'est-à-dire la phase de la porteuse de l'oscillation modulée reçue, est effectuée séparément d'une correction de la fréquence de porteuse, c'est-à-dire la fréquence de la porteuse de l'oscillation modulée reçue.

**13.** Procédé selon la revendication 12, caractérisé en ce qu'au moins une opération de filtrage a lieu entre la correction de la fréquence de porteuse et la correction de la phase de porteuse.

**14.** Procédé selon l'une quelconque des revendications précédentes, caractérisé en ce que le signal dont la phase de porteuse, c'est-à-dire la phase de la porteuse de l'oscillation modulée reçue, et la fréquence de porteuse, c'est-à-dire la fréquence de la porteuse de l'oscillation modulée reçue, ont été corrigées, est fourni au détecteur de paramètres ou aux détecteurs de paramètres.

**15.** Procédé selon la revendication 12 ou 13, caractérisé en ce que seul le signal dont la fréquence de porteuse a été corrigée est fourni au détecteur de paramètres ou aux détecteurs de paramètres.

**16.** Procédé selon l'une quelconque des revendications 1 à 12, caractérisé en ce que le signal dont la fréquence de porteuse et la phase de porteuse n'ont pas encore été corrigées est fourni au détecteur de paramètres ou aux détecteurs de paramètres.

**17.** Procédé selon l'une quelconque des revendications précédentes, caractérisé en ce qu'il est utilisé dans la synchronisation de phases de porteuses.

**18.** Procédé selon l'une quelconque des revendications 1 à 16, caractérisé en ce qu'il est utilisé dans la synchronisation de fréquences de porteuses.

**19.** Procédé selon l'une quelconque des revendications 1 à 16, caractérisé en ce qu'il est utilisé dans la synchronisation de phases d'horloges.

**20.** Procédé selon l'une quelconque des revendications 1 à 16, caractérisé en ce qu'il est utilisé dans la synchronisation de fréquences d'horloges.

**21.** Procédé selon l'une quelconque des revendications 1 à 16, caractérisé en ce qu'il est utilisé dans la synchronisation de niveaux.

**22.** Procédé selon l'une quelconque des revendications 1 à 16, caractérisé en ce qu'il est utilisé dans la correction d'erreur de quadrature.

**23.** Procédé selon l'une quelconque des revendications 1 à 10, 17 à 22, caractérisé en ce que la synchronisation est effectuée par commande prédictive.

**24.** Procédé selon l'une quelconque des revendications 1 à 10, 17 à 22, caractérisé en ce que la synchronisation est effectuée par commande à rétroaction.

**25.** Procédé selon l'une quelconque des revendications 1 à 10, 17 à 22, caractérisé en ce que la synchronisation est effectuée partiellement par commande prédictive et partiellement par commande à rétroaction.

Fig.1

EP 0 845 178 B1

EP 0 845 178 B1

Fig. 4

Fig. 5

*Fig. 3*

EP 0 845 178 B1

Fig. 2 b

Fig. 2 a